# EUROPEAN PATENT SPECIFICATION

(11) **EP 3 608 216 B1**
(45) Date of publication and mention of the grant of the patent: **11.01.2023**
(21) Application number: 19189046.6
(22) Date of filing: 30.07.2019
(51) Int. Cl.: B63C 11/12

(54) **DIVING MASK**
TAUCHERMASKE
MASQUE DE PLONGÉE

(30) Priority: 06.08.2018 IT 201800007897
(43) Date of publication of application: 12.02.2020
(73) Proprietor: Mares S.p.A., 16035 Rapallo (GE) (IT)
(72) Inventor: Oelrich, Christof, 16043 Chiavari (IT); Angelini, Sergio, 16035 RAPALLO (GE) (IT)
(74) Representative: Karaghiosoff, Giorgio Alessandro

(56) References cited:
- EP-A1- 2 684 795
- EP-A2- 1 319 592
- WO-A1-2013/186185
- US-A1- 2006 010 584
- US-A1- 2015 314 167
- US-A1- 2016 327 810

## Description

The present invention concerns equipment for swimming and watersports, and especially concerns a diving mask.

The diving masks currently on the market are generally constituted by a facial body made of material adapted to sealingly adhere to the face of the user, generally made of elastomeric material which is often of the silicone type, provided with one or two openings to house, respectively, one or two transparent elements through which the user is allowed to see, and able to achieve the seal around the same in cooperation with a stiff frame generally made of thermoplastic material such as Nylon, polycarbonate, polypropylene or the like; the mask is placed on the head of the user thanks to a strap, which is usually made of the same material as that of the facial body of the mask.

Examples of known masks are disclosed in EP 1 319 592 A2 and US 2006/010584 A1.

If, on one hand, the transparent element, usually made of tempered glass, offers the best guarantees in terms of stiffness and transparency, it makes this type of equipment susceptible to sealing problems in the respective seats on the other, in addition to the decidedly considerable manufacturing costs and to the problems related to the fragility and weight of the material.

Since the pressure must always be compensated, i.e. equal between the outside and inside of the mask, to prevent the eyes from coming out of their sockets, the resistance to pressure is not a critical factor, whereas a certain stiffness is useful in avoiding deformations, for example by pulling the strap which fixes the mask to the head. In the absence of sufficient stiffness, the deformations of the transparent element or a divergence between the two transparent elements with respect to one another would cause image deformations which would confuse sight. Moreover, the processing steps for manufacturing diving masks of this type substantially provide three different paths for the four components, given that the facial body and the strap can also be made in the same mold, and thus one assembling step.

In order to achieve a diving mask of simplified structure and construction, and thus with lower manufacturing costs, and which ensures good visibility and an effective seal on the face of the user, a mask, made in one piece by using a unique material molded with different thicknesses, was suggested in document IT1343719, with the aim to achieve both transparent elements with an appropriate degree of transparency and a facial body able to interact properly with the face of the user.

Aside from the considerations of theoretical nature with regard to the efficacy of this solution, there really are few materials which allow, depending on the thickness used, to achieve the adequate flexibility necessary for the peripheral seal of the facial body and the adequate stiffness to allow a non-deformed and clear vision through the transparent elements. In the document, it seems that a preferential solution is the one which uses a platinic silicone, which is a material with optimal qualities in terms of the interactions with the user, given it is approved for food use and decidedly resistant to aging and aggressive chemicals, but also particularly soft (Shore A hardness 30-70). Consequently, although very appropriate for making the facial body of the mask, it doesn't seem much suitable for making the transparent elements. The other preferable plastic material reported in the document mentioned is PVC (polyvinylchloride), which, however, is chemically less inert than silicone rubber and relatively harder (in the order of Shore A 65 with the use of plasticizers); these characteristics thus make it more appropriate for making the transparent elements, but less appropriate for making the facial body of the mask. Moreover, the general trend is to use less PVC for various reasons.

Object of the present invention as claimed is thus to provide a diving mask of simple and economic production that is simultaneously able to provide optimal performances both in terms of the efficiency of the transparent elements and of the comfort and functionalities of the facial body and that is also less delicate in terms of possible damages and that can withstand high elastic deformations during its transport without losing the functional technical characteristics.

Object of the present invention is thus a diving mask, comprising a facial body and at least one transparent element, made by co-molding at least two different thermoplastic elastomers, said transparent element being formed by a thermoplastic elastomer provided with a relatively greater degree of hardness, and said facial body being formed by a thermoplastic elastomer provided with a relatively lower degree of hardness than that of the transparent element.

In a preferred embodiment, the thermoplastic elastomer forming said transparent element, or said transparent elements, of the mask has Shore A hardness between 75 and 95, and preferably 85, whereas the thermoplastic elastomer forming the facial body of the mask has Shore A hardness between 35 and 55, and preferably 45 or Shore D between 30 and 65, preferably 45.

According to the invention, said thermoplastic elastomers are both copolymers of styrene, and in particular styrol/ethene-butene/styrol or styrene/ethylene/butyl/styrene copolymers.

According to the invention, said diving mask further comprises a relatively stiffer frame, also co-molded with the transparent element(s) and the facial body, which frame is made of thermoplastic elastomer provided with Shore D hardness between 50 and 70, and preferably 60.

Such thermoplastic elastomer is olefinic, such as a co-polymer of ethylene/propylene/propylene, polypropylene or a combination of polymers and polyolefin copolymers or else it is constituted by polycarbonate or nylon or combinations of these materials when compatible with each other.

According to the invention, said frame is made between said transparent element, or said transparent elements, and said facial body.

Alternatively, the frame is co-molded on both said facial body and said transparent element, or said transparent elements, directly coupled to each other.

It will be clear to the expert of the art how the mask according to the present invention can also provide more than two transparent elements, such as for example occurs in the panoramic masks made according to the known art, in which a further transparent element is provided for each eye in the area of the mask body facing the mouth and/or in the area of the mask body facing the forehead and/or in the two side areas facing the ears, it being possible to provide any combination of said further transparent elements in any number and arrangement.

In alternative or in combination with one or more of the embodiments described, it is also possible to make the only transparent element or the two transparent elements each associated with an eye in the form of a cup or polygonal half-shell, such as for example is known in swimming goggles and described in the patent application EP3194034 of the same owner.

In this case, the edges of the polygonal half-shell transparent element would give stiffness and could at least in part prevent, also for the mask with two transparent elements each associated to viewing with a respective eye, i.e. with two transparent elements, the overmolding of a whole frame with a third material. This frame could thus alternatively extend for at least part of the peripheral edges of the transparent elements and not for their entire extension and be at least for some parts of the same material as that of the mask body perhaps provided with greater material thicknesses in at least some areas.

Further alternatives can consist in a combination of these variants constituted by a reinforcing frame made of a third material extending for a certain length of the shape of the transparent element(s), a part of the mask body of greater thickness in the adhering area and at least one part of the peripheral edge of the transparent element(s), which are provided in a coincident position, partially coincident and/or non-coincident with the segments of said frame and folding edges of the transparent element, which extend at least in some areas of this/these transparent element(s) also in coincident position, partially coincident and/or non-coincident with the areas in which the segments of said frame are provided and/or with the thicker areas of the mask body.

The definition of such combinations depends on the shape of the mask, on the use for which it is intended and can be defined, based on experience, in the context of simple design activities by the expert of the art.

Further advantages and characteristics of the diving mask according to the present invention will become clearer in the following description of some embodiments thereof, made by way of example and without limitations, with reference to the accompanying tables of drawings, in which:
figure 1 is a perspective view of a diving mask not claimed
figure 2 is a perspective view with parts in longitudinal section of the mask of figure 1;
figure 3 is a perspective view with parts in cross section of the mask of figure 1;
figure 4 is a perspective view of an embodiment of the diving mask according to the present invention;
figure 5 is a perspective view with parts in longitudinal section of the mask of figure 4;
figure 6 is a perspective view with parts in cross section of the mask of figure 4;
figure 7 is a perspective view with parts in cross section of an embodiment variant of the mask according to the present invention; and
figure 8 is a perspective view with parts in longitudinal section of the mask of figure 7.

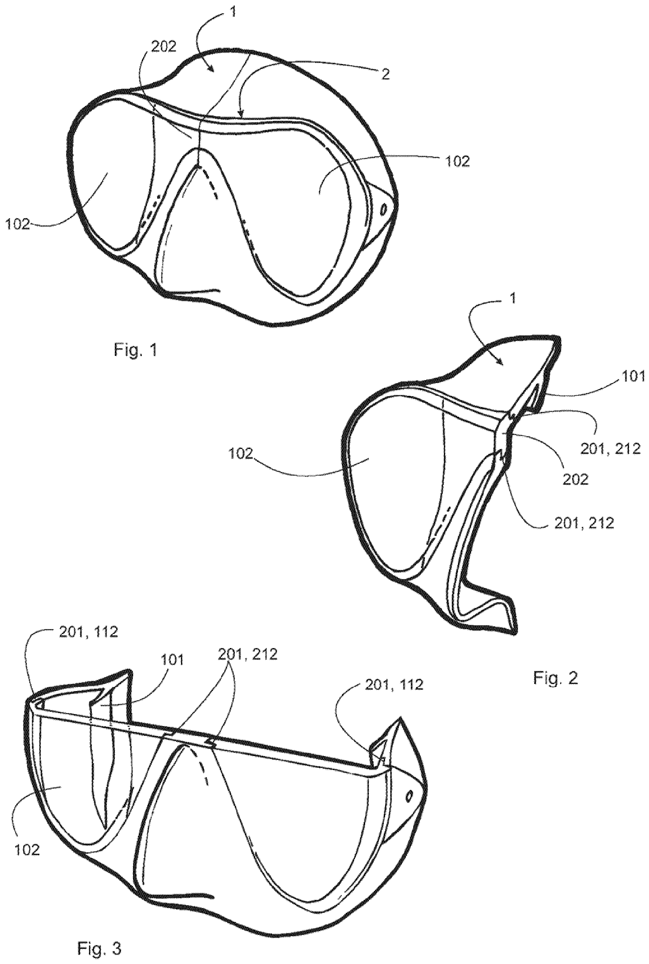

A diving mask not claimed is shown in figure 1; 1 denotes the facial body of the mask, whereas 2 denotes a unique transparent element, formed by the two lobes 102 and by the bridge 202 and which extends such as to overlap with the area of the two eyes of the user. In figure 2, the mask is shown with parts in longitudinal section, and it is possible to distinguish the lip 101 of the facial body 1, intended to exert the seal on the face of the user, as well as the contact surfaces between the peripheral edge 201 of the body 1 and the peripheral edge 212 of the bridge 202 of the transparent element 2 can be seen. In figure 3, where equal parts correspond to equal numbers, the contact surfaces between the peripheral edge 201 of the body 1 and the peripheral edge 112 of the lobes 102 of the transparent element 2 are also shown.

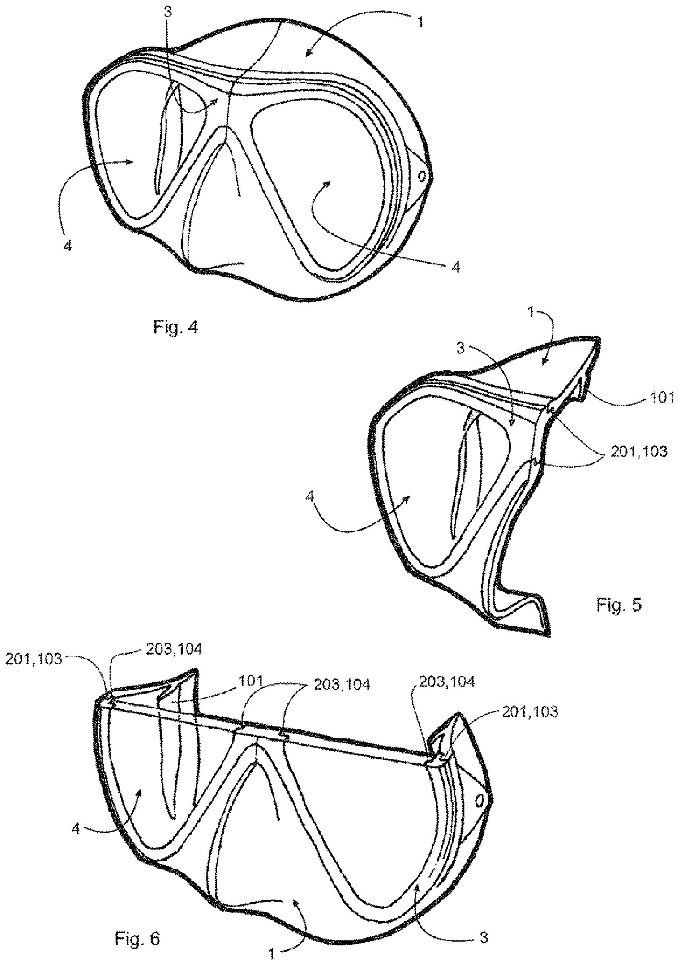

An embodiment of the mask of the invention is shown in figure 4; 1 denotes the facial body of the mask again, which has, in this case, the frame 3 and a couple of transparent elements 4 independent of one another and essentially coincident with the area of respectively one of the two eyes. The mask with parts in longitudinal section is shown in figure 5, and the contact surfaces between the peripheral edge 201 of the body 1 and the peripheral edge 103 of the frame 3 are shown in addition to the lip 101 of the body 1. In figure 6, in which equal parts correspond to equal numbers, the contact surfaces between the inner edge 203 of the frame 3 and the peripheral edge 104 of the transparent elements 4 are also shown.

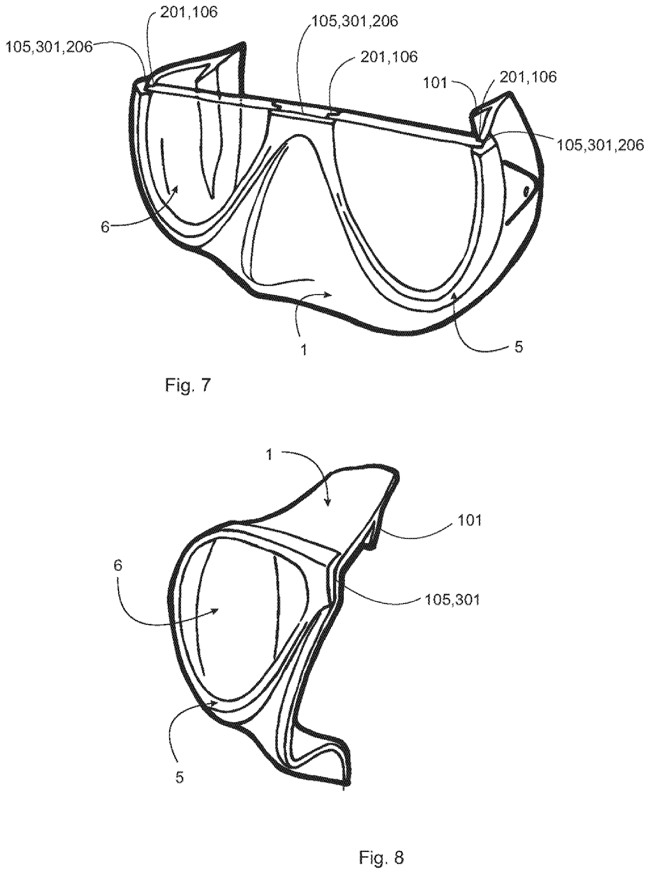

In the variant shown in figure 7, the crystal glasses 6 have the contact surfaces 106 with the peripheral edge 201 of the body 1, in addition to the contact surfaces 206 with the inner edge 105 of the frame 5. Said edge 105 of the frame 5 is further in contact with the surface 301 of the facial body 1; the contact between the surface 301 of the facial body 1 and the edge 105 of the frame 5 in the area between the two transparent elements 6 is highlighted in figure 8.

The structure of the mask according to the present invention will become clearer hereunder. In the example not claimed of figures 1 to 3, a mask made by co-molding two thermoplastic elastomer materials, suitable for this type of process and which are easily coupled to each other, is shown. The thermoplastic elastomer used to make the unique transparent element 2 is preferably provided with a Shore A stiffness degree between 75 and 95, and more preferably in the order of 85. This way, the unique transparent element 2 is able to impart sufficient stiffness to the structure of the mask so that to prevent deformations in the sight of the user or problems related to the wearability thereof. The facial body 1 is made with a thermoplastic elastomer provided with a decidedly lower Shore A stiffness degree, between 35 and 55, and preferably 45, so that to allow the facial body itself, and especially the lip 101, to better adhere to the face of the user. Among the thermoplastic elastomers, there can preferably be the copolymers of styrene, and in particular the so-named SEBS, i.e. styrol/ethene-butene/styrol or styrene/ethylene/butyl/styrene copolymers.

By using only two materials, it is substantially necessary to select the unique transparent element for both eyes.

By using two transparent elements, such as in the case of biocular mask of figures 4 to 6, in combination with the aforesaid only two materials for the transparent elements and the mask body, the difference between the stiffness of the transparent element and that of the facial body would tend to make the two transparent elements diverge, especially when exerting strain on the strap. In order to avoid this drawback, a mask was conceived, in which there is provided a further component, also co-molded, using an even stiffer thermoplastic elastomer with respect to the one of the glasses.

In the embodiment shown in figures 4 to 6, a frame 3, which accommodates the transparent elements 4 inside it, is used, whereas it cooperates with the facial body 1 on the outside. This way, the two transparent elements are adequately supported, and their focal plane, as well as the facial body of the mask, do not suffer deformations, also when subjected to the pulling of the strap. The thermoplastic elastomer used for the frame has a Shore D stiffness degree between 50 and 70, and preferably in the order of 60; among the thermoplastic elastomers, the olefinic ones are preferred, and especially the co-polymers, for example ethylene/propylene/propylene terpolymers.

In the embodiment variant of figures 7 and 8, in this case, the frame 5, which can be made of the same material as the one described for the frame 3, does not act as a link for the connection between the transparent elements 6 and the facial body 1, but provides its stiffening support outside of the aforesaid body of transparent elements.

In general, the use of different thermoplastic materials allows to better regulate the characteristics of the different areas of the mask with respect to the needs of the user; with the solution adopted according to the present invention, the sealing lip 101 is able, thanks to the intrinsic properties of the thermoplastic elastomer used, to better adhere to the face of the user, whereas the transparent elements are instead sufficiently stiff to provide an effective view; the frame provides further stiffness to the assembly.

According to a further embodiment, the frame made of the further third thermoplastic elastomer can also possibly be provided in the case of the mask according to figures 1 to 3, in which the transparent element is made in one piece and unique for both eyes.

Moreover, the thermoplastic elastomers are generally devoid of problems in terms of the fogging inside the mask, a characteristic which clearly differentiates them from silicone rubber.

This way, the mask conceived combines manufacturing simplicity and savings with optimal characteristics of wearability and visibility.

## Claims

1. Diving mask, comprising a facial body (1) and at least one transparent element (4) through which the vision by the user takes place, made by co-molding at least two different thermoplastic elastomers, said at least one transparent element being formed by a thermoplastic elastomer provided with a relatively greater degree of hardness, and said facial body (1) being formed by a thermoplastic elastomer provided with a relatively lower degree of hardness with respect to that of said at least one transparent element and in which
- said diving mask further comprises a relatively stiffer frame (3) also co-molded with the at least one transparent element and/or with the at least two transparent elements (4) and the facial body (1), which is made of thermoplastic elastomer with a Shore D hardness between 50 and 70, and preferably 60, and in which
- said frame is made between said transparent element or said transparent elements, and said facial body, and
- in which said thermoplastic elastomers are both copolymers of styrene, and in particular styrol/ethene-butene/styrol or styrene/ethylene/butyl/styrene copolymers and
- said thermoplastic elastomer of the frame is olefinic, such as a co-polymer of ethylene/propylene/propylene polypropylene or a combination of polymers and polyolefin copolymers or else it is constituted by polycarbonate or nylon or combinations of these materials when compatible with each other.

2. Diving mask according to claim 1, in which the thermoplastic elastomer forming said at least one transparent element, or at least two transparent elements each dedicated to viewing with one eye, has a Shore A hardness between 75 and 95, and preferably 85, whereas the thermoplastic elastomer forming the facial body of the mask has a Shore A hardness between 35 and 55, and preferably 45.

3. Diving mask according to one or more of the preceding claims , in which the frame is co-molded on both said facial body and said transparent element or said transparent elements that are directly coupled to each other.

## Patentansprüche

1. Tauchmaske, umfassend einen Gesichtskörper (1) und mindestens ein transparentes Element (4), durch welches hindurch die Sicht des Benutzers erfolgt, hergestellt durch Co-Spritzgießen von mindestens zwei verschiedenen thermoplastischen Elastomeren, wobei das mindestens eine transparente Element aus einem thermoplastischen Elastomer besteht, das einen relativ höheren Härtegrad aufweist, und der Gesichtskörper (1) aus einem thermoplastischen Elastomer besteht, das einen relativ niedrigeren Härtegrad als das mindestens eine transparente Element aufweist, und bei dem
- die Tauchmaske außerdem einen relativ steiferen Rahmen (3) umfasst, der ebenfalls durch Co-Spritzgießen mit dem mindestens einen transparenten Element und/oder mit den mindestens zwei transparenten Elementen (4) und dem Gesichtskörper (1) hergestellt wird und aus einem thermoplastischen Elastomer mit einer Shore D-Härte zwischen 50 und 70, vorzugsweise 60, besteht, und bei dem
- der Rahmen zwischen dem transparenten Element oder den transparenten Elementen und dem Gesichtskörper ausgebildet ist, und
- wobei die thermoplastischen Elastomere sowohl StyrolCopolymere, insbesondere Styrol-Ethenbuten-Styrol- oder Styren-Ethylen-Butyl-Styren-Copolymere sind und
- wobei das thermoplastische Elastomer des Rahmens olefinisch ist, wie z. B. ein Ethylen-Propylen-Propylen-Polypropylen-Copolymer oder eine Kombination von Polymeren und Polyolefin-Copolymeren, oder es besteht aus Polycarbonat oder Nylon oder Kombinationen dieser Materialien, sofern sie miteinander kompatibel sind.

2. Tauchmaske nach Anspruch 1, wobei das thermoplastische Elastomer, das das mindestens eine transparente Element oder die mindestens zwei transparenten Elemente bildet, die jeweils für die Sicht mit einem Auge bestimmt sind, eine Shore A-Härte zwischen 75 und 95, vorzugsweise 85, aufweist, während das thermoplastische Elastomer, das den Gesichtskörper der Maske bildet, eine Shore A-Härte zwischen 35 und 55, vorzugsweise 45, aufweist.

3. Tauchmaske nach einem oder mehreren der vorhergehenden Ansprüche, wobei der Rahmen durch Co-Spritzgießen sowohl an den Gesichtskörper als auch an das transparente Element oder an die transparenten Elemente, die direkt miteinander verbunden sind, hergestellt ist.

## Revendications

1. Masque de plongée, comprenant un corps facial (1) et au moins un élément transparent (4) à travers lequel la visualisation de l'utilisateur s'effectue, et réalisé par co-moulage au moins deux élastomères thermoplastiques différents, ledit au moins un élément transparent étant formé par un élastomère thermoplastique pourvu d'un degré de dureté relativement supérieur, et ledit corps facial (1) étant formé par un élastomère thermoplastique pourvu d'un degré de dureté relativement inférieur par rapport à celui dudit au moins un élément transparent et dans lequel
- ledit masque de plongée comprend en outre un cadre relativement plus rigide (3) également co-moulé avec l'au moins un élément transparent et/ou avec les au moins deux éléments transparents et le corps facial (1), qui est fait d'élastomère thermoplastique ayant une dureté Shore D comprise entre 50 et 70, et de préférence 60, et dans lequel
- ledit cadre est réalisé entre ledit élément transparent ou lesdits éléments transparents et ledit corps facial, et
- dans lequel lesdits élastomères thermoplastiques sont tous deux des copolymères du styrène, et notamment des copolymères styrène/éthène - butène/styrène ou styrène/éthylène/butyle/styrène et
- ledit élastomère thermoplastique du cadre est oléfinique, tel qu'un copolymère d'éthylène/propylène/propylène polypropylène ou une combinaison de polymères et de copolymères de polyoléfines, ou est constitué de polycarbonate ou de nylon ou de combinaisons de ces matériaux lorsqu'ils sont compatibles entre eux.

2. Masque de plongée selon la revendication 1, dans lequel
l'élastomère thermoplastique formant ledit au moins un élément transparent, ou au moins deux éléments transparents dédiés chacun à la visualisation d'un œil, présente une dureté Shore A comprise entre 75 et 95, et de préférence 85, tandis que l'élastomère thermoplastique formant le corps facial du masque présente une dureté Shore A comprise entre 35 et 55, et de préférence 45.

3. Masque de plongée selon l'une ou plusieurs des revendications précédentes, dans lequel le cadre est co-moulé à la fois sur ledit corps facial et sur ledit élément transparent ou sur lesdits éléments transparents qui sont directement couplés entre eux.
